# EUROPEAN PATENT APPLICATION

(11) **EP 4 461 255 A2**
(43) Date of publication of application: **13.11.2024**
(21) Application number: 24181269.2
(22) Date of filing: 24.08.2007
(51) Int. Cl.: A61C 1/00

(54) **SYSTEMS FOR TREATING DENTAL OR PERIODONTAL PROBLEMS**

(30) Priority: 24.08.2006 US 840282 P; 09.02.2007 US 704655
(62) Divisional of application: 21160099.4
(71) Applicant: Pipstek, LLC, Laguna Hills, CA 92653 (US)
(72) Inventor: DIVITO, Enrico E., Laguna Hills, 92653 (US); TUBBS, Kemmons, Laguna Hills, 92653 (US); GLOVER, Douglas L., Laguna Hills, 92653 (US); COLONNA, Mark P., Laguna Hills, 92653 (US)
(74) Representative: KIPA AB

(57) **Abstract**

A method that includes the following effects: the ability to expand, porositize. clean, decontaminate, debride, break-down and/or destroys, or aids and accentuates the dissolution or extraction of biological structures, nerves and tissues. The methodology uses nano-technology and/or other chemistries may or may not be excited by energy sources to expand and porositize the tissue, which enhances the penetration and effectiveness and acceleration of subsequent chemical, mechanical, and/or procedural steps in the protocol or process. Furthermore, the method includes the ability to associate with and/or initiate in the reconstructive growth and healing process associated with healthy tissue after surgery and/or the ability to destroy diseased or necrotic tissues or cells. The method also includes the ability to begin, construct or stage the activation of cells and/or tissues, including the area of transplantation and use in stem or primordial cell accentuation, their attachment and/or stimulation for growth and differentiation.

## Description

### FIELD OF THE INVENTION

The present invention is related to the field of dentistry, medicine and veterinary medicine. More specifically, the present invention is a method and device for rapid molecular modification of biological structures for dental, medical and veterinary procedures and/or treatments. Additionally, the present invention is an integration of nanotechnology, chemistry, chemoacoustic wave propagation, lasers, photoacoustics, ultrasonics, radiofrequency, magnetic fields, electric fields and other sciences with treatments and procedures in dentistry, medicine and veterinary medicine.

### BACKGROUND OF THE INVENTION

Recent advances in the fields of dentistry, medicine, and veterinary medicine necessitate functional and efficient implementation of therapies during exploratory and restructuring procedures. Approaches of interest combine efficiency and esthetics with the inherent utility of the investigative area. Of specific interest is the arena of dental root canals that while rapidly increasing in volume throughout the world have lagged in gaining concerted integration of recent scientific advancements such as nanotechnology. This also applies to dental treatment of caries and periodontal disease.

Currently, root canal dental procedures require the drilling and filing away of some dentin wall or physical structure of the tooth root, thereby weakening the integrity or strength of the tooth. The procedure of this invention without requiring mechanical filing of the root canal also has the possibility of totally removing the nerve and debriding the root canal, as well as, the lateral canals of the root canal system thus leaving the tooth structure intact.

When performing root canals it is desirable to efficiently debride or render harmless all tissue, bacteria, and/or viruses within the root canal system. The root canal system includes the main root canal and all of the accessory or lateral canals that branch off of the main canal. Some of these accessory canals are very small and extremely difficult to reach in order to eliminate any bacteria and/or viruses. Such accessory canals may bend, twist, change cross-section and/or become long and small as they branch off from the main canal, making them very difficult to access or target therapeutically.

The accepted dental procedure is to mechanically pull out the main canal nerve thereby separating it from the accessory canal nerves (which stay in place) then filing out the main canal with a tapered file. This action leaves an undesirable smear layer along the main canal and actually plugs some of the accessory canal openings, which potentially trap harmful pathogens or maladies. This is very undesirable. The dentist must then chemo-mechanically debride both main and accessory canals, including the smear layer produced by the filing.

This is often done with a sodium hypochlorite solution and various other medicaments that are left in the root canal system for 30 to 45 minutes. This current methodology does not necessarily debride or render harmless all of the accessory root canals because of the difficulty in first cleaning off the smear layer then negotiating some of the smaller twisted lateral canals. As a result many treatments using this method fail over time due to reoccurring pathology. This often requires retreatment and/or sometimes loss of the tooth.

Therefore, there is a present and continuing need for new and improved dental, medical, and veterinary procedures that address the above problems. Thus, there exists an unfulfilled need to link new chemistries and nano- or micro- scale technologies with dental, medical and/or veterinary procedures that are able to rapidly decontaminate and break down cells, tissues, and nerves; with the concurrent ability to change and/or modify an infected or diseased area.

### SUMMARY OF INVENTION

It is an object of the present invention to provide new medical, dental and veterinary therapeutics, treatments and procedures.

The novel features that are considered characteristic of the invention are set forth with particularity in the appended claims. The invention itself, however, both as to its structure and its operation, together with the additional objects and advantages thereof, will best be understood from the following description of the preferred embodiment of the present invention when read in conjunction with the accompanying drawings. Unless specifically noted, it is intended that the words and phrases in the specification and claims be given the ordinary and accustomed meaning to those of ordinary skill in the applicable art or arts. If any other meaning is intended, the specification will specifically state that a special meaning is being applied to a word or phrase. Likewise, the use of the words "function" or "means" in the Description of Preferred Embodiments is not intended to indicate a desire to invoke the special provision of 35 U.S.C. § 112, paragraph 6 to define the invention. To the contrary, if the provisions of 35 U.S.C. § 112, paragraph 6, are sought to be invoked to define the invention(s), the claims will specifically state the phrases "means for" or "step for" and a function, without also reciting in such phrases any structure, material, or act in support of the function. Even when the claims recite a "means for" or "step for" performing a function, if they also recite any structure, material or acts in support of that means of step, then the intention is not to invoke the provisions of 35 U.S.C. § 112, paragraph 6. Moreover, even if the provisions of 35 U.S.C. § 112, paragraph 6, are invoked to define the inventions, it is intended that the inventions not be limited only to the specific structure, material or acts that are described in the preferred embodiments, but in addition, include any and all structures, materials or acts that perform the claimed function, along with any and all known or later- developed equivalent structures, materials or acts for performing the claimed function.

### DETAILED DESCRIPTION OF THE DRAWINGS

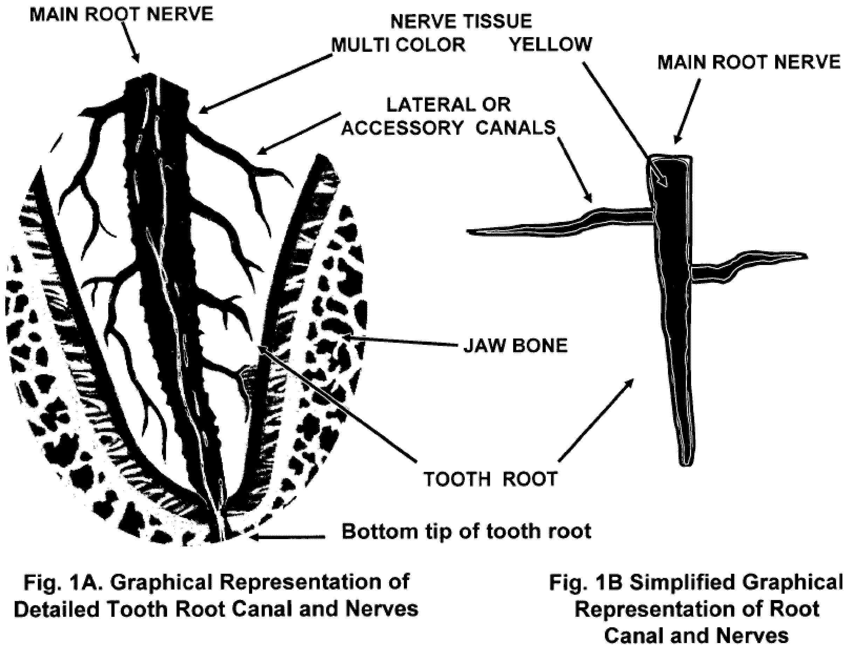

Fig. 1a and 1b Illustrates a root canal system including the main root canal and all of the accessory or lateral canals that branch off of the main canal (Ia). Some of these accessory canals are very small and extremely difficult to reach in order to eliminate any bacteria and/or viruses. Such accessory canals may bend, twist, change cross-section and/or become long and small as they branch off from the main canal, making them very difficult to access or target therapeutically. Ib is a simplified graphical representation of the same.

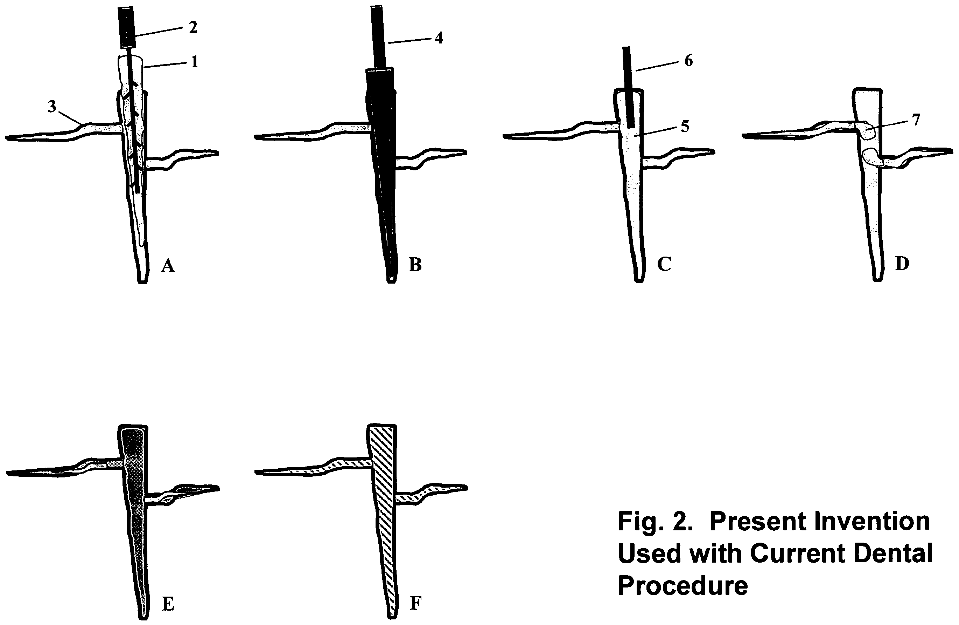

Fig. 2 Illustrates a portion of the present invention used with current dental procedure.
   A. The main root nerve 1 is excised with a barbed broach 2. B. The main root canal 5 is opened with a hand or rotary tapered file 4. C. The first solution of the present invention is placed the opened canal 5 and activated using at least one of the following energy sources 6: photon, including lasers, acoustic, photo-acoustic, thermal, thermal-acoustic, radiofrequency, microwave, magnetic field, electric field, etc. D. The activated solution affects any remaining nerve tissue 1 in the main root 5 or accessory canals 3 by expanding and initiating decomposition of the nerve tissue 1. E. The second solution is added to complete tissue decomposition. F. The cavities 3 and 5 are then rinsed, filled and sealed (crosshatched).

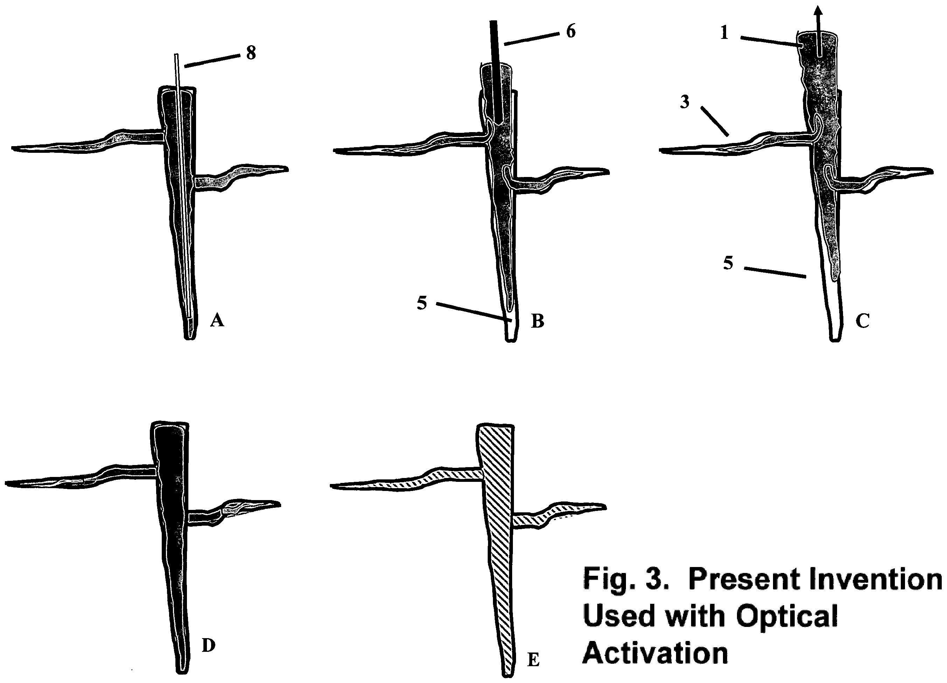

Fig. 3 Illustrates a more preferred approach using the current invention. A. The first solution, which may or may not contain nanotechnology, is slowly dispensed into the main root nerve and canal, 1 and 5, respectively, using a syringe 8 with nerve 1 still intact (no filing required) and allowed to penetrate into accessory nerve canals 3. B. An activating energy source 6, in this approach photo-acoustic, is applied. C. The first solution is activated by the energy source 6 thereby expanding the dental root nerve tissue 1 (up to 10-fold) and hydraulically forcing a portion of the nerve 1, along with a portion of the accessory nerve out of the tapered root structure and the accessory nerve out of the accessory canals.
   Simultaneously, the nerve tissue 1 becomes more porous allowing more agent access to repeat the process. D. The enlarged nerve 1 is optionally removed from the root canal 5. The second solution is added to complete tissue decomposition. E. The cavity is then rinsed and filled and sealed (crosshatched).

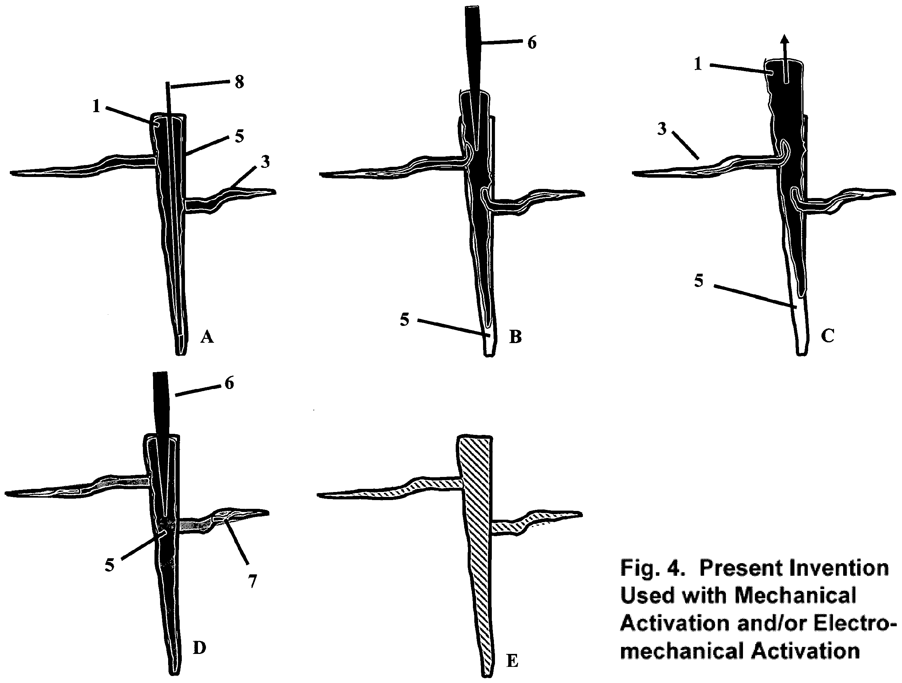

Fig. 4 Illustrates a more preferred approach using the current invention. A. The first solution, which may or may not nanotechnology, is slowly dispensed into the main root nerve and canal, 1 and 5, respectively, with nerve 1 still intact (no filing required) with a syringe 8 and allowed to penetrate into accessory nerve canals 3. B. The activating energy source 6 in this approach, mechanical-acoustic or ultrasonic, is applied. C. The first solution is activated by the energy source 6 thereby expanding the dental root nerve tissue 1 (up to 10-fold) and hydraulically forcing the nerve 1, along with a portion of the accessory nerve, out of the tapered root structure. Simultaneously, the nerve tissue 1 becomes more porous allowing more agent access to repeat the process. D. The enlarged nerve is optionally removed from the root canal and the second solution is added to complete tissue decomposition. E. The cavity is then rinsed and filled and sealed (crosshatched).

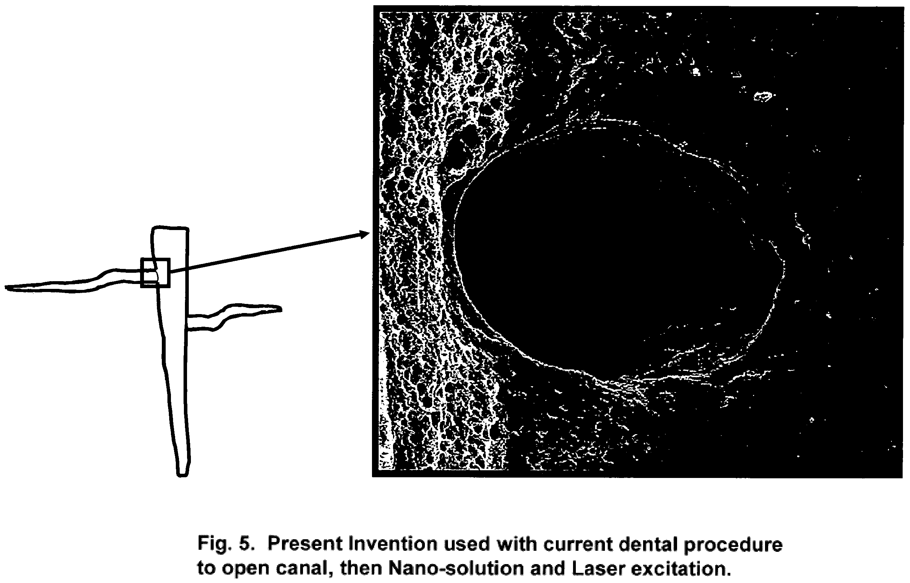

Fig. 5 is a Scanning Electron Micrograph (SEM) illustrating lateral canal with reticular surface cleaning created by the present invention, which are preserved and sterilized for subsequent filling and embalming, i.e. using rubber, gutta-percha, latex, and other polymers, etc.

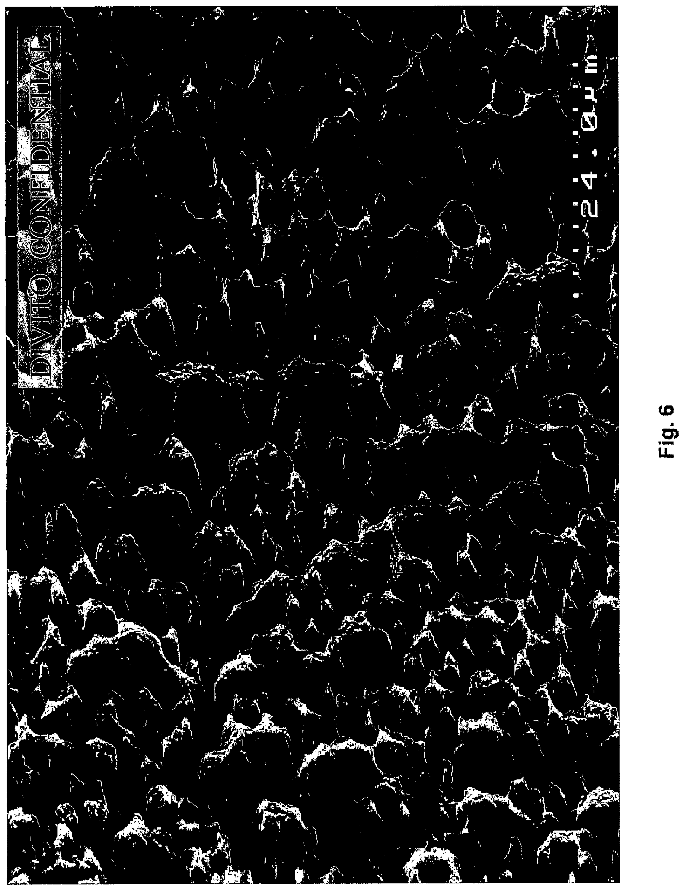

Fig. 6 is an expanded view of the Scanning Electron Micrograph (SEM) shown in Fig. 5 clearly illustrating internal reticular surfaces cleaning created by the present invention.

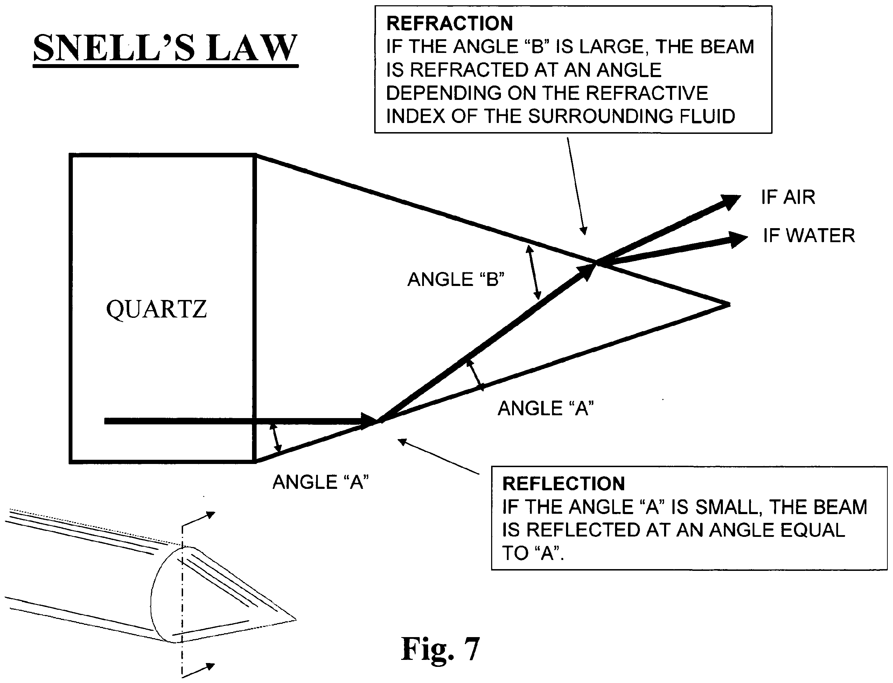

Fig. 7 is an illustration of a laser fiber tip preferably used according to the present invention.

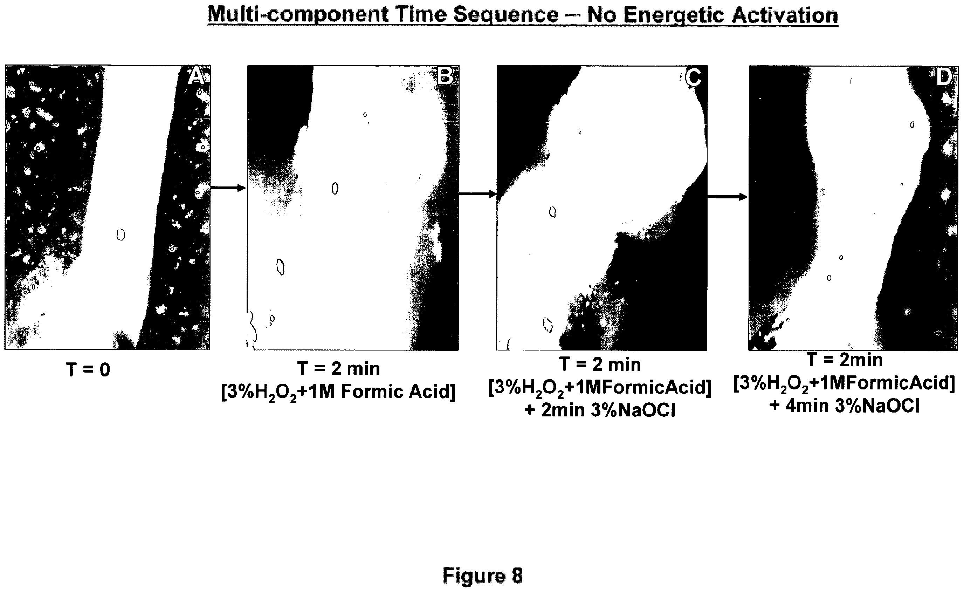

Fig 8 is a timed series of photographs illustrating the present invention as used with mult-component chemistry and without energetic activation on an extracted and isolated bovine nerve demonstrating expansion and dissolution effects.

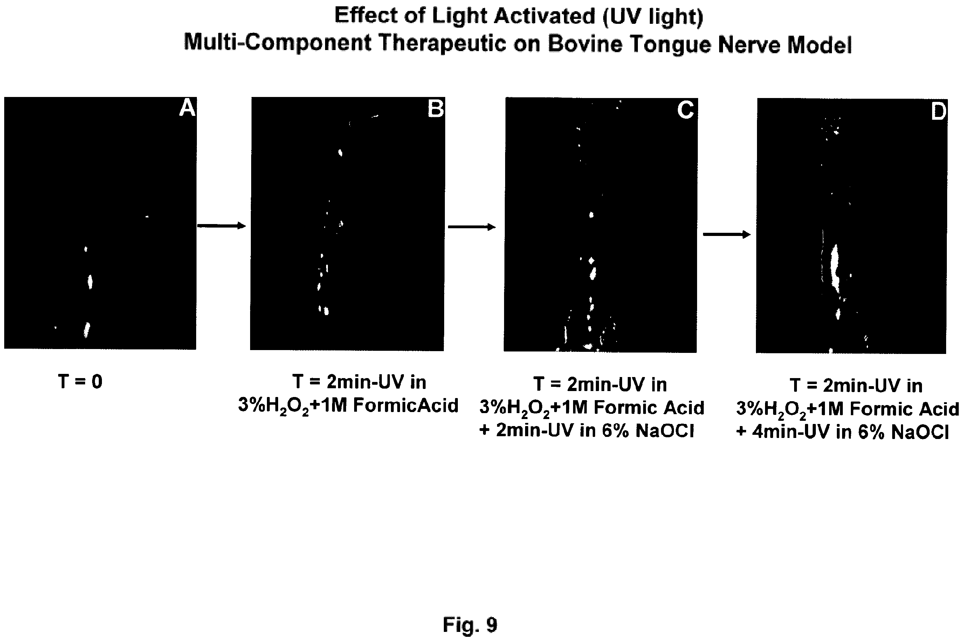

Fig 9 is a timed series of photographs illustrating the present invention as used with multicomponent chemistry with light (Ultraviolet) activation (as the energetic activation source) on an extracted and isolated bovine nerve demonstrating expansion and dissolution effects.

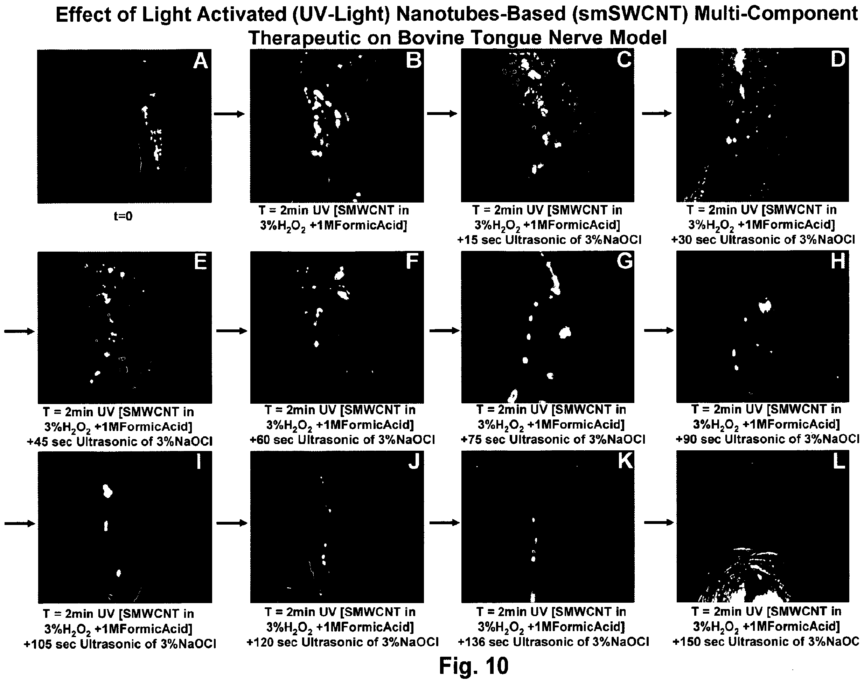

Fig 10 is a timed series of photographs illustrating the present invention as used with multicomponent chemistry containing carbon nanotubes (small Single Walled Carbon Nanotubes (sSWCNT)) with light (Ultraviolet) activation (as the energetic activation source) on an extracted and isolated bovine nerve demonstrating expansion and dissolution effects.

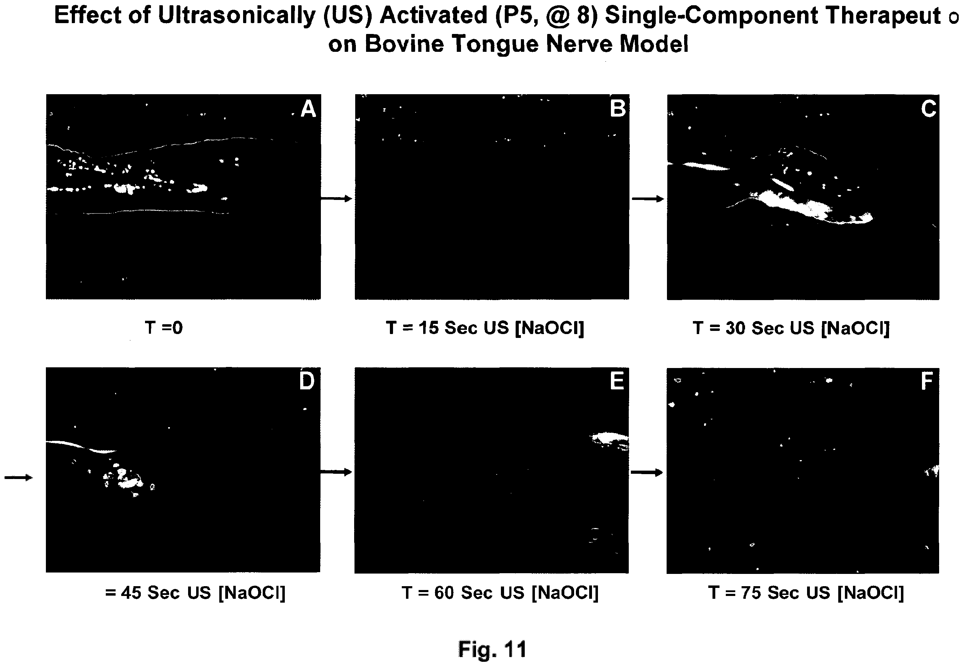

Fig 11 is a timed series of photographs illustrating the present invention as used with single-component chemistry with ultrasonic activation (as the energetic activation source) on an extracted and isolated bovine nerve demonstrating expansion and dissolution effects.

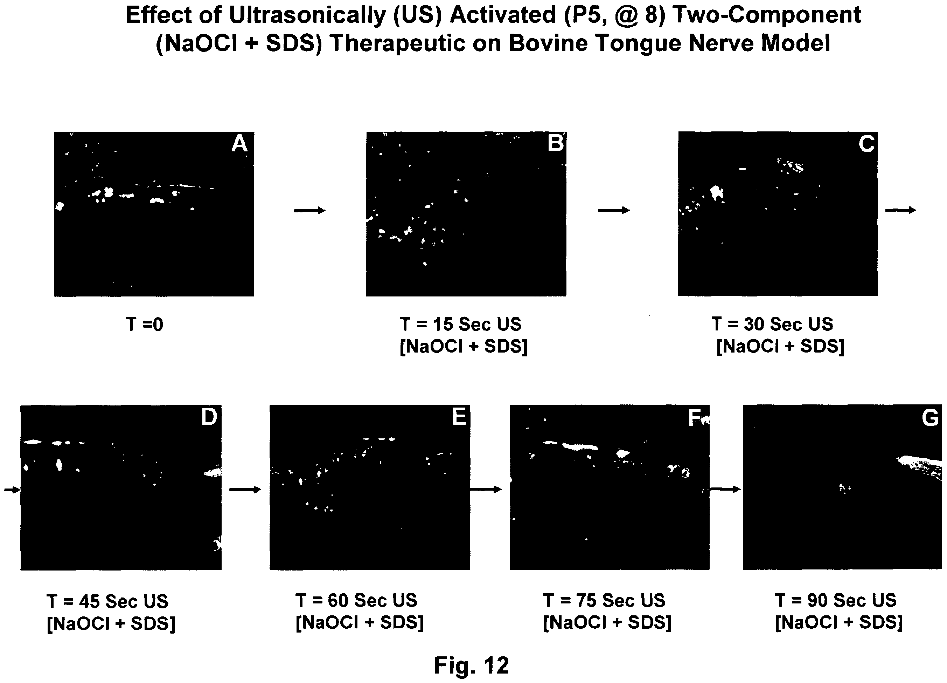

Fig 12 is a timed series of photographs illustrating the present invention as used with two-component chemistry with ultrasonic activation (as the energetic activation source) on an extracted and isolated bovine nerve demonstrating expansion and dissolution effects.

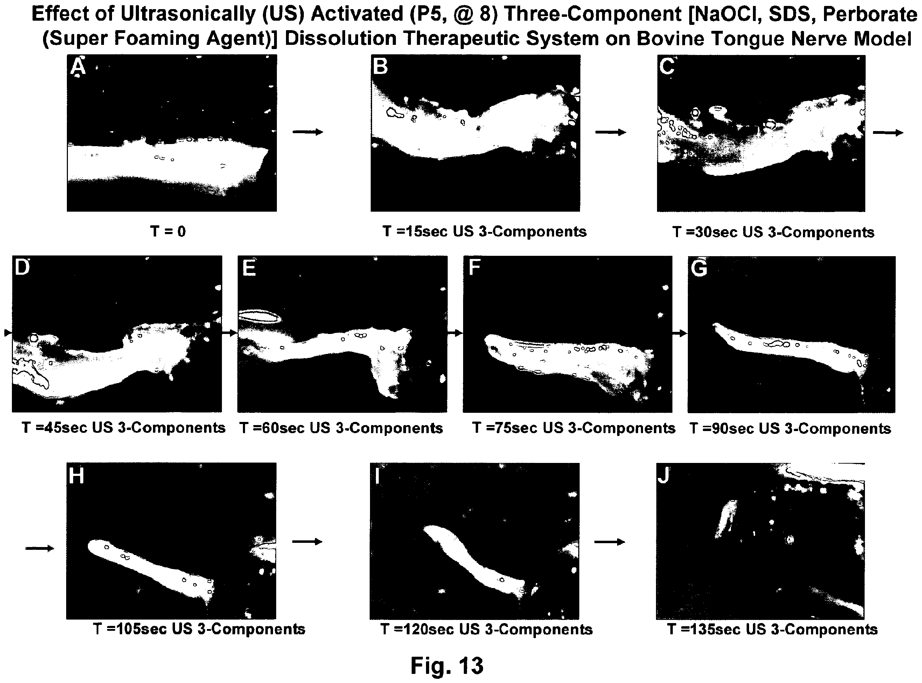

Fig 13 is a timed series of photographs illustrating the present invention as used with three-component chemistry with ultrasonic activation (as the energetic activation source) on an extracted and isolated bovine nerve demonstrating expansion and dissolution effects.

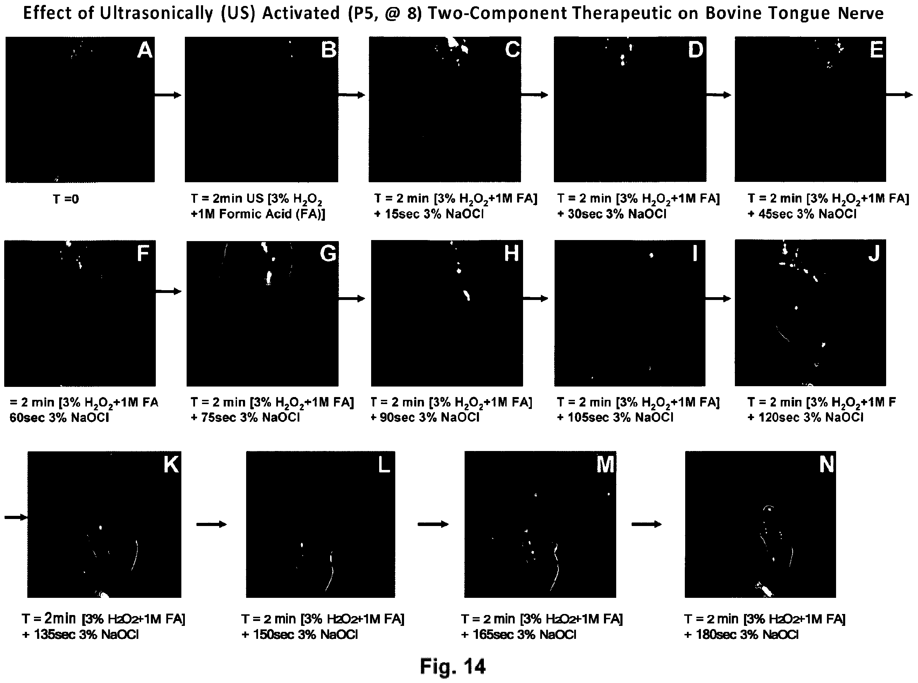

Fig 14 is a timed series of photographs illustrating the present invention as used with two-component chemistry as the first solution with ultrasonic activation and then with a second dissolution solution again utilizing ultrasonic activation (as the energetic activation source) on an extracted and isolated bovine nerve demonstrating expansion and dissolution effects.

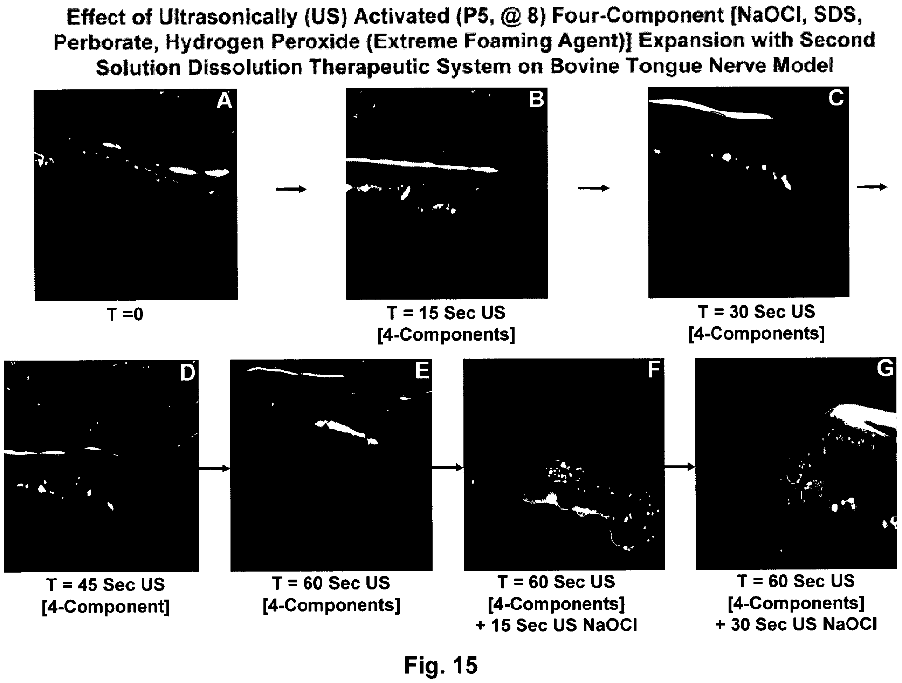

Fig 15 is a timed series of photographs illustrating the present invention as used with four-component chemistry as the first solution with ultrasonic activation and then with a second dissolution solution again utilizing ultrasonic activation (as the energetic activation source) on an extracted and isolated bovine nerve demonstrating expansion and dissolution effects.

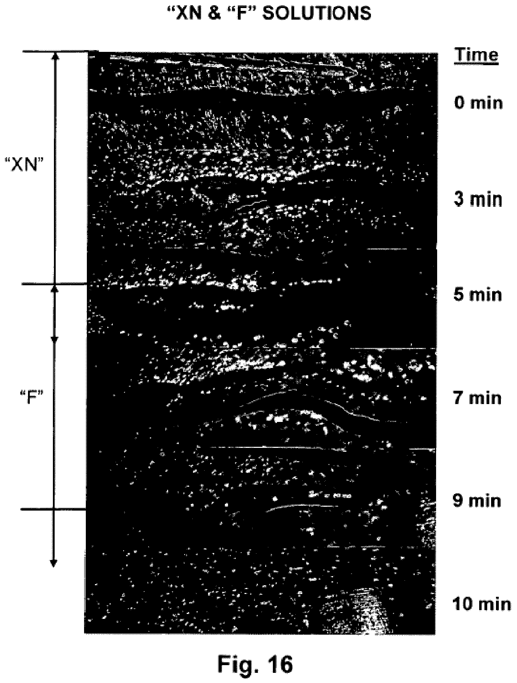

Fig. 16 is a timed series of photographs illustrating the present invention as used with ultrasonic activation and nanotechnology (Solution XN) on an extracted and isolated bovine nerve demonstrating expansion and dissolution effects (Solution F).

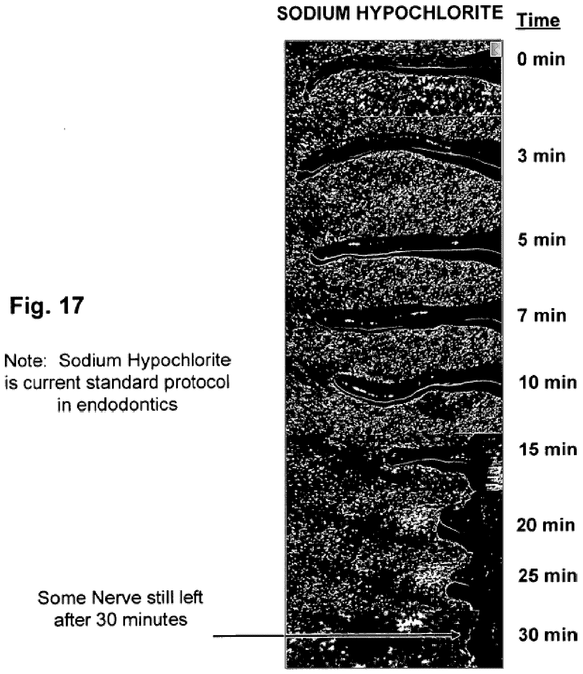

Fig. 17 is a timed series of photographs illustrating current endodontic dental protocol and the use of Sodium Hypochlorite only as used on an extracted and isolated bovine nerve demonstrating only partial dissolution effects.

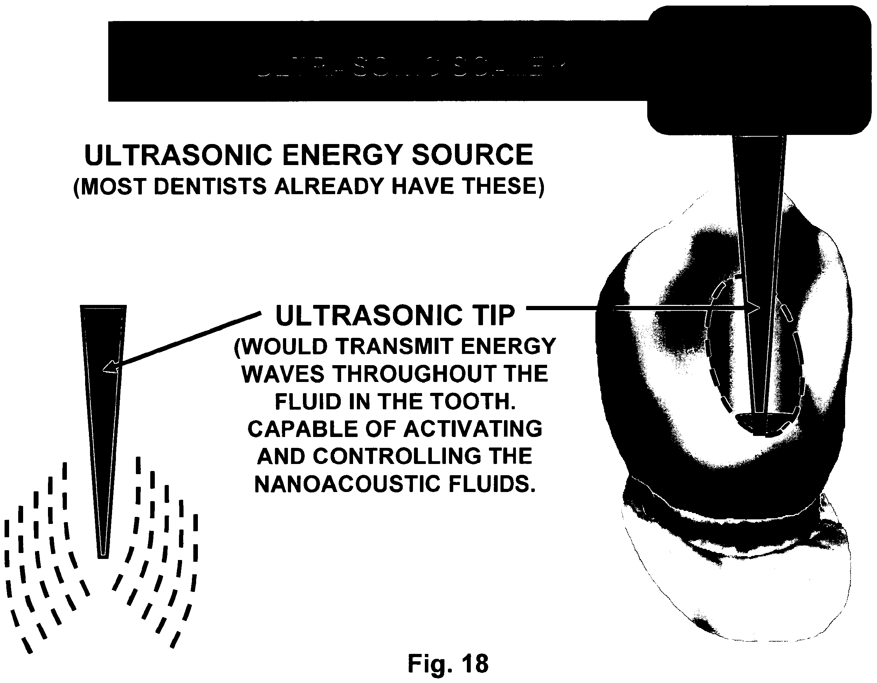

Fig. 18 is an illustration of an ultrasonic device. An ultrasonic energy source can be utilized to impart motion to nanotubes, fluids, or other structures used in the present invention.

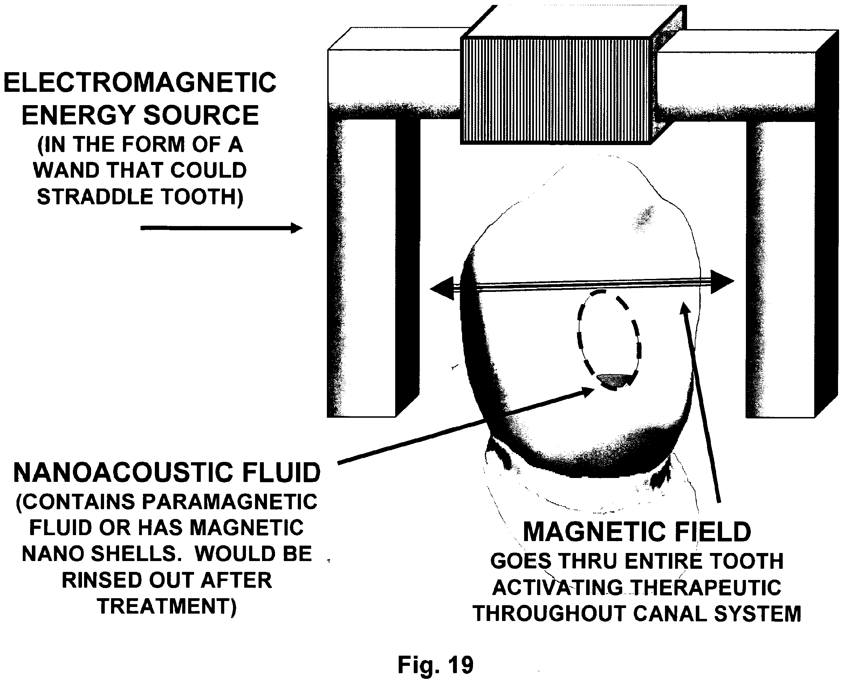

Fig. 19 is an illustration of a magnetic field device. A magnetic field can be utilized to impart motion to nanotubes, fluids, or other structures containing magnetic materials. An alternating or pulsed magnetic field could be applied by an external device that would bridge the tooth or point of interest. The moving particles would stir the therapeutic throughout the canal system and act as an abrasive on debris.

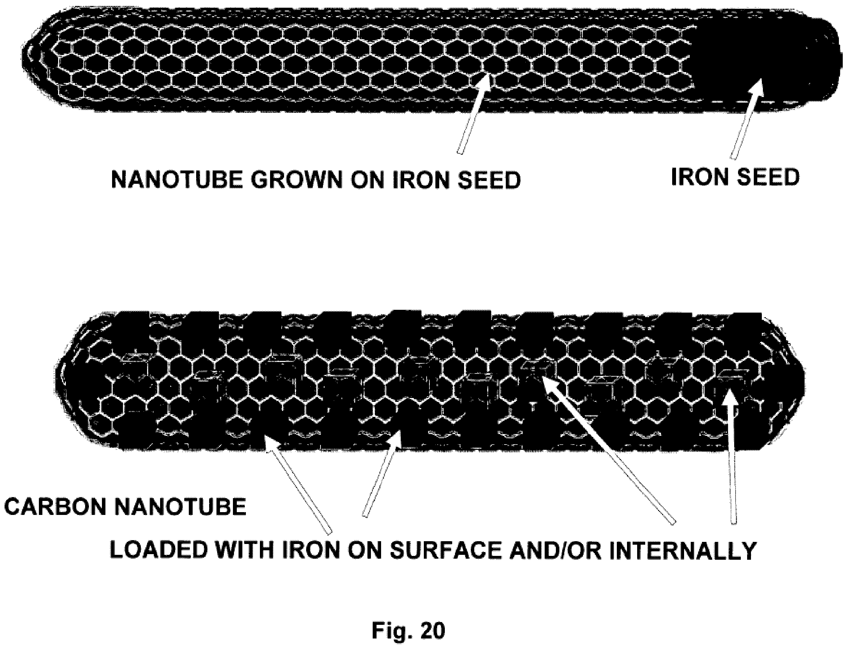

Fig. 20 is an illustration depicting iron seed nanotubes. Nanotubes or other microstructures can be made magnetic by growing them on an iron or magnetic seed or by inserting, infusing, or adsorbing iron or magnetic compounds to the nanotube or microstructure. Also shown in this figure is a nanotube grown on an iron seed. Fig 19 shows magnetic compounds that have been infused within as well as adsorbed to the surface.

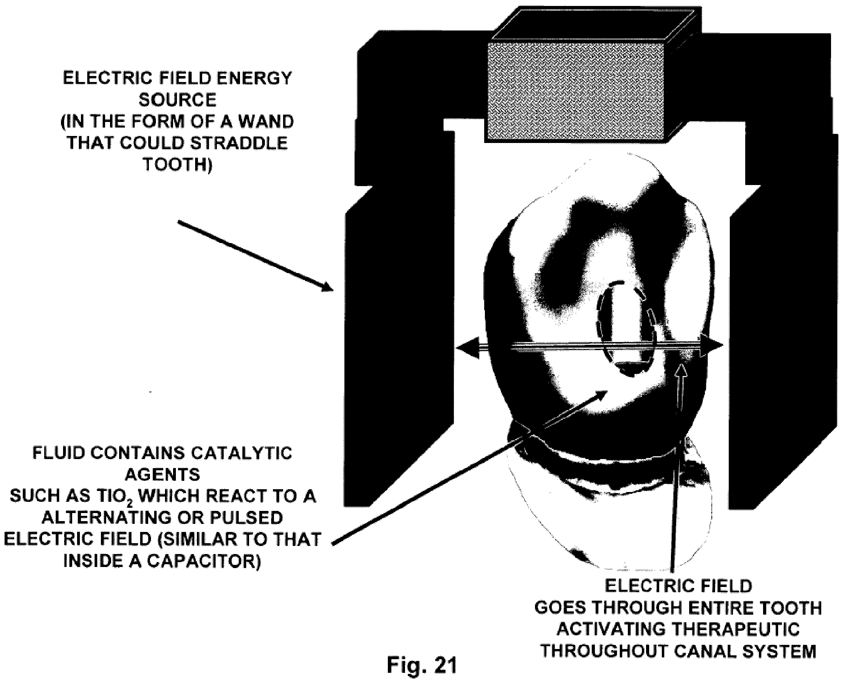

Fig. 21 is an illustration of the Electric field apparatus. An electric field can be utilized to activate various catalytic agents such as Tiθ 2. Once activated the Tiθ 2 or other similar agents become bactericidal in nature and can destroy bacteria. The electric field could be applied by an external device that would bridge the tooth. Electric fields may also be Used at a later day to reactivate the titanium dioxide without reopening the tooth.

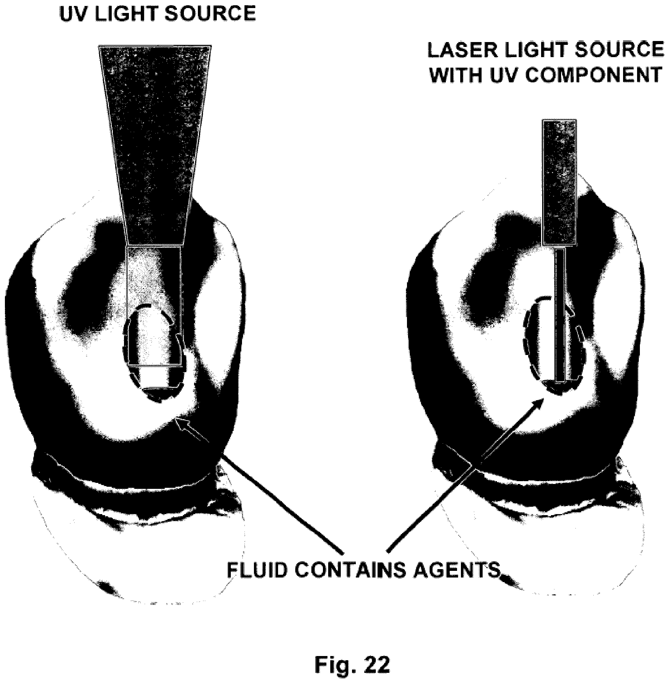

Fig. 22 is an illustration depicting some light sources that can be utilized to activate various components of a therapeutic fluid. It can cause sensitizers to release various therapeutic compounds; it can cause sensitizers to release rapidly expanding or phase changing elements that produce a chemoacoustic wave. It can also activate O2 or similar compounded to become bactericidal.

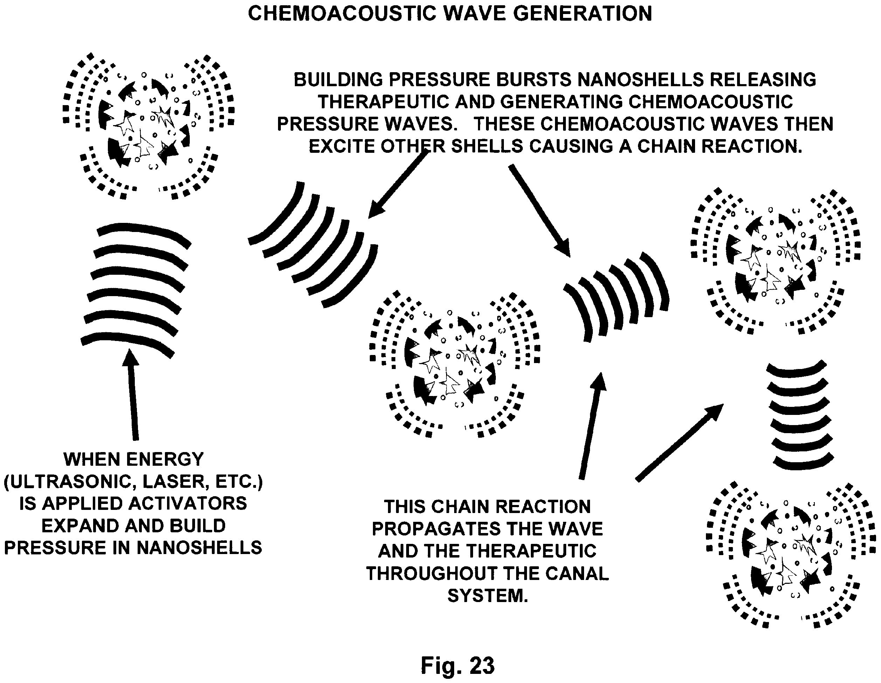

Fig. 23 is an illustration showing chemoacoustic wave propagation. One of the external energy sources activates one of the sensitizers that releases a rapidly expanding or phase change compound, a chemoacoustic wave will be released by that sensitizer. This wave will propagate and can act upon another sensitizer causing it to release its expanding or phase change component and creating another chemoacoustic wave. This can cause a chain reaction throughout the therapeutic fluid creating a major stirring action and therapeutic dispensing throughout the canal system.

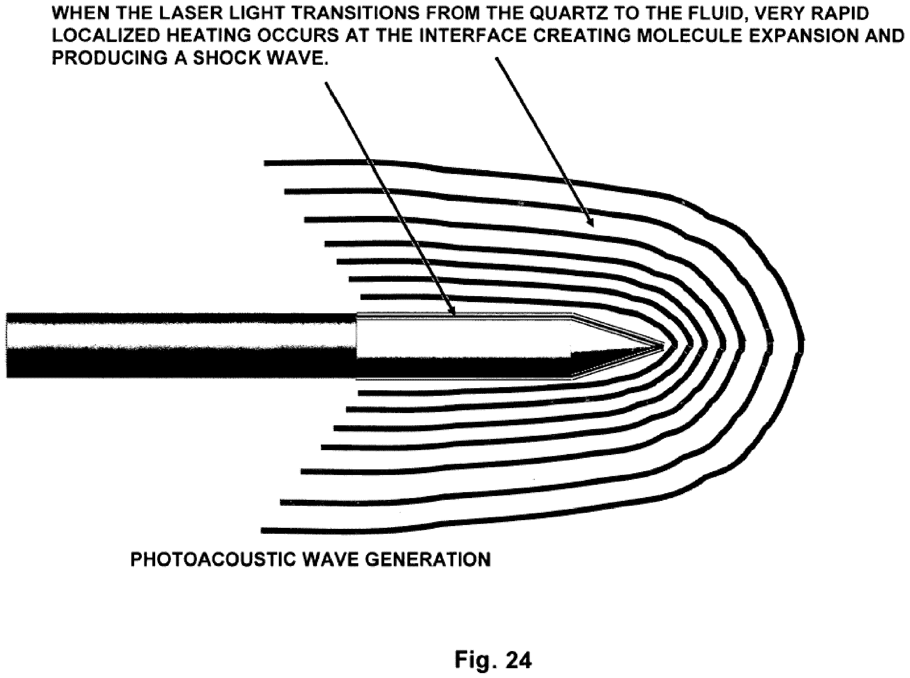

Fig. 24 is an illustration of the Photoacoustic tip. A laser tip that is conical and may have a stripped back section of the sheath will produce a photoacoustic wave when fired into a fluid. The transition of the laser light from the tip (usually quartz) to the fluid is not 100% efficient and produces very rapid heating at the transition. This rapid heating expands the molecules and produces a photoacoustic shock wave that propagates throughout the canal system. This wave helps distribute the therapeutic, as well as, disrupt any remaining nerve tissue, bacteria, and virus.

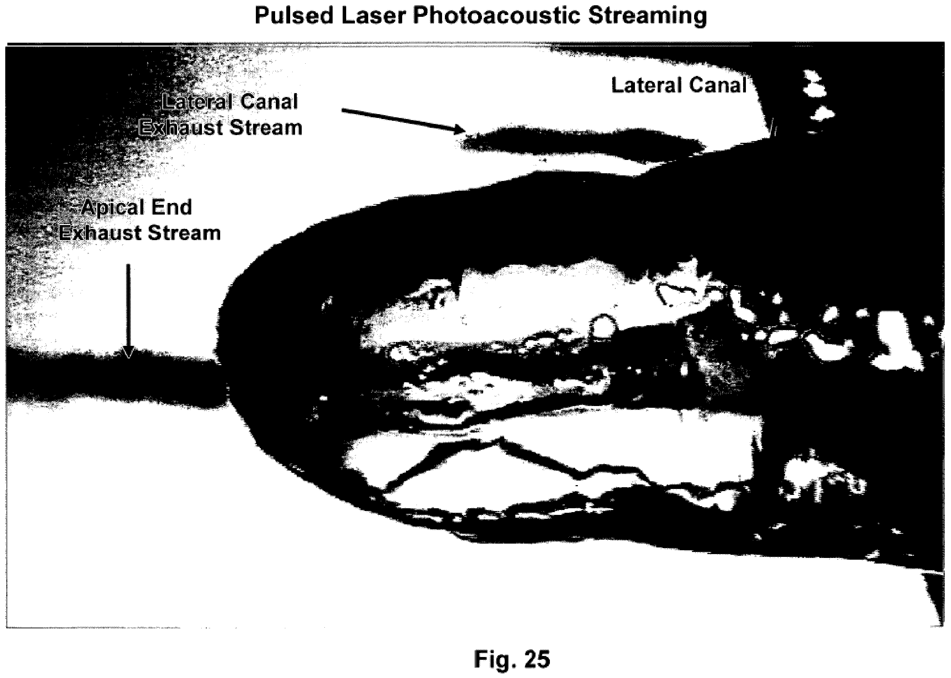

Fig. 25 is an illustration of Photoacoustic Streaming resulting from use of the current invention with a Photoacoustic tip in a cleared tooth. Exhaust (see labeled arrows) exiting from the lateral canal and apical end of the cleared tooth demonstrate the creation of a photoacoustic stream after the laser is fired through the radial tip located in the tooth crown.

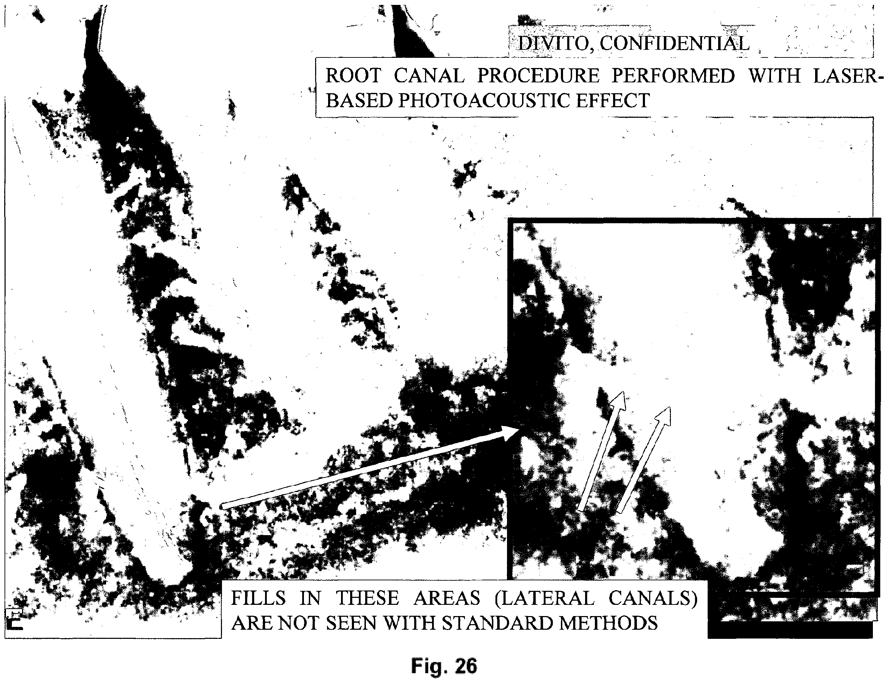

Fig. 26 is an X-ray illustrating the current invention performed with laser-based photoacpustic effect in a dental root canal procedure. Arrows point out the target X-ray area that shows filing of the lateral canals with gutta-percha, a radio opaque material. Note that these fills of the lateral canals are not seen with standard current dental approaches.

### DESCRIPTION OF THE PREFFERED EMBODIMENTS

The present invention is useful in treating dental, medical, and veterinary problems; primarily dental surface and nerve preparations. The present invention uses therapeutic solution with or without nanotechnology and/or microtechnology in dental, medical, and veterinary application during procedures that otherwise face reoccurring infection, inefficient performance and at an increase in expenses. The result of this invention has the potential to decrease the patient chair time by over 50%, thereby reducing the cost of the procedure to the practitioner and reducing the potential for future failures over time.

The overall scheme according to the present invention comprises a first solution that is introduced into nerve tissue, typically in a tooth. The first solution enlarges and porositizes the nerve tissue. Most, if not all, of the nerve is mechanically removed from the tooth by the forces produced by the expanding tissue on the tapered walls. A second solution is introduced into the canal left by the optionally removed the nerve tissue, which dissolves any remaining nerve tissue and debrides the accompanying area. The porosity of the tissue allows for rapid penetration of fluids. This may also be accomplished with a single solution containing components of the first and second solutions.

The first dispensed solution comprises a carrier, and at least an oxidizing agent, such as hydrogen peroxide, perborates, hypochlorites, or other oxidizing agents and combinations thereof. Additional components may be included into the first solution, including reducing agents, sources of oxygen, chelating agents (such as ethylenediamine tetraacetic acid, EDTA), chelating agents coordinated with metals (such as EDTA-Calcium), anti-oxidants, sensitizing agents, catalytic agents, magnetic agents and rapidly expanding chemical, pressure or phase change agents and/or combinations of the like. The carrier is preferably water, pastes, foams, chemistry-based architectures (e.g. nanotubes, hollow spheres) and/or gels or a combination of the like. The source of oxygen is preferably an oxidizing bleach agent, such as sodium hypochlorite, perborate or peroxide and the like. The sensitizing agent is preferably a nano- or micro-structure as exemplified by fullerenes, such as nanotubes or buckyballs, or other nanodevices (including micro-sized) capable of sensitizing the oxygenating or activated or activatable chemical, e.g., oxidative bleaching agent. The catalytic agent may be titanium oxide or other similar inorganic agents or metals. The rapidly expanding chemical, pressure or phase change agent may be coated hollow spheres or tubes with chemistries encased, adsorbed or absorbed to the agent. When activated these chemistries expand rapidly producing a localized acoustic wave throughout the solution. This is a chemoacoustic wave phenomenon.

The sensitizing is accomplished when the first solution is applied to a targeted area directly or with mechanical, physical or other assistance such as mild vibrational or ultrasonic stimulation. The sensitizer is then activated by an energy source. Preferred energy sources include, but are not limited to; photons (light), sonic, ultrasonic, photo-acoustic, thermo- acoustic, micromechanical stirring, magnetic fields, electric fields, radio-frequency, and/or other excitor mechanisms or other similar forms that can impart energy to the fluid or combination of these, which is absorbed by the sensitizer structure and/or fluid thus creating a resultant reaction, expansion, acoustic wave, or the like.

Other energy sources include optical, ultraviolet, chemoacoustic (shock waves created by rapid chemical expansion creating shock and pressure waves), rotary-mechanical stirring (special stirring bit placed for dental handpiece), magnetic fields and electric fields (both can penetrate the tooth structure from external sources), radio-frequency and microwave.

One embodiment of the energy source is a pulsed laser light that is photoacoustically coupled to the first solution. The laser light is delivered using a commercially available laser source and an optical light fiber attached at a proximate end to the laser source and has an application tip at the distal end. The application tip may be flat, but is preferably a beveled or tapered tip having a taper angle (typically between 30 and 36 degrees but can be larger or smaller). Preferably any cladding on the optic fiber is stripped from approximately 5 mm to 15 mm of the distal end. The taper angle of the fiber tip and removal of the cladding provide improved lateral dispersion of the emitted laser light and photoacoustic effect. A photoacoustic wave is produced when the laser light transitions from the quartz tip to the fluid. This transmission is not 100% efficient and produces very rapid localized heating at the interface. This molecule expansion produces a strong photoacoustic wave that propagates throughout the canal system.

It was found that the photoacoustic waves produced by the laser light in the first solution provides enhanced penetration of the first solution into the surrounding tissue and accessory canals, thereby allowing a therapeutic agent to reach areas of the canal system that are not accessible to laser light alone.

This same methodology has the potential for use with other chemical species that do not require the use of the nanotubes, but whose molecules react with the inherent energy and whose molecules produce similar effects to those previously mentioned above, i.e. expansion, pressure waves, debridement, etc.

The first solution can preferably include additional effective ingredients such as surfactants to reduce the surface tension of the solution and act as a lubricant between the nerves and the canals; antibiotics; stabilizers; polar, non-polar solvents, and the like.

In addition to expansion and porositizing the nerve tissue, it is found that the first solution also mechanically abrades, cleans and debrides the surface of the canal or tissues.
Resultant Scanning Electron Micrographs (SEM' s) show the reticular surface of the dentin to be devoid of infection and malady and allowing for rinsed removal of the debris elements.

In an alternate embodiment, the root nerve is first mechanically removed and the first solution is added to the resultant canal. The first solution is activated, thereby enlarging and porositizing any remaining nerve structures, which can then now be optionally mechanically removed, and mechanically abrades, cleans and debrides the surface of the canal.

After all accessible nerve structures have been mechanically removed; a second dissolution solution is added to the canal. This dissolution solution chemically dissolves any remaining nerve structure (i.e., that may remain in the bottom the main canal or in any accessory canals). Preferred dissolution solutions include hypochlorite, sodium hypochlorite, perborate, calcium hydroxide, acetic acid/lubricant/doxacyclene and other like nerve tissue or matrix dissolving substances such as chelating agents (EDTA) and inorganic agents such as titanium oxides.

Finally, the resultant cleaned canal may be filled according to standard practices in the industry.

This type of procedure combines the use of pre-activated, activatable, or activated therapeutics with or without nano/micro- technology with readily available stimulatory technology and is applicable not only to root canals, but also to bone and other highly networked material where infection is problematic, e.g. dental implants, bone infection, periodontal disease, vascular clotting, organ stones, scar tissues, etc. This application process, may also be used in other soft tissue applications where it is necessary to expand the diseased tissue or material to allow more rapid access and penetration to healing agents, chemicals or biologicals; i.e. antibiotics, peptides, proteins, enzymes, catalysts, genetics (DNA, mRNA or RNA or derivatives) or antibody based therapeutics or combinations thereof. In some cases the present methodology may be used to rapidly dissolve or destroy the diseased tissue areas, i.e., expanding the diseased tissue in an abcess, allows for extremely rapid and efficient penetration of healing or biological agents. The method of this invention allows for the very rapid tissue expansion within the nanotechnology and resulting in rapid access by additional chemistry through repeated cycling until the targeted expansion and porosity of the material is obtained. This expansion effect is obtained within a few minutes by applying the activating energy source locally. This rapid action of the nanotechnology is limited to only those areas exposed or proximal to the nanotechnology and the extent of the reaction is limited by the amount and duration of the applied exciting energy source. The extreme porosity then allows for very rapid infusion with the subsequent chemical species that can impose destruction, healing or cleaning or a combination of these events. The speed of this healing action may allow medical procedures that currently are not viable because of extensive time required for standard healing processes, i.e., sometimes adjacent tissue is infected because the original infection cannot be controlled more rapidly than the infection propagates. In this case, expanding the diseased tissue to enhance porosity, will allow near instantaneous access for the medication, e.g., antibiotic or other agents.

More additional, the present invention includes the following effects: the ability to expand; induce pores, holes, channels; clean; decontaminate; debride; breakdown; denature; physically destroy, aid and accentuate the dissolution or extraction of biological structures, nerves and tissue. The present methodology expands the porosity of the tissue, which enhances the penetration and effectiveness and acceleration of subsequent chemical, mechanical, and/or procedural steps in the protocol or process. Furthermore, the present invention includes the ability to associate with and/or initiate in the reconstructive growth and healing process associated with healthy tissue after surgery and/or the ability to destroy diseased or necrotic tissues or cells. Much furthermore, the present invention includes the ability to begin, construct or stage the activation of cells and/or tissues, including the area of transplantation and use in stem or primordial cells accentuation, their attachment and/or stimulation for growth and differentiation.

Alternatively, the present invention can also be used to activate cells, e.g., progenitor, primordial or stem cells, to promote inherent nascent bone or tissue growth and differentiation, as well as in transplantation where stem or primordial cells are accentuated in their attachment and stimulated for growth and differentiation.

Another use for the present invention is in the field of dental caries, cavities or tooth decay. X-ray identifies a caries. The caries is entered using a minimal event (small dental drillbit or laser drilled holes), the first and second solutions are added and activated, this procedure arrests, cleans and debrides the pathological malady without according damage to the healthy tissue. After the therapeutic solution cleans the tooth area interior or affected caries, the used solution is removed from the caries, a second X-ray may be performed with or without a radio-opaque fluid that is introduced into the caries to identify the extent of cleaning performed by the first solution. These solutions may be reintroduced into the caries in order to further clean the interior, as necessary. After the caries has been determined to be clean and free from infection, it may then be filled according to current dental practices with only a small hole to seal on the surface. A single solution containing ingredients common to the first and/or second solutions may also be utilized for this purpose.

An alternate method for introducing the first and/or second solutions would be to use a vacuum/pressure enhanced delivery methods. This would apply not only to caries but also to other root canal and other dental and medical applications. One such method would be to apply a vacuum to the root canal, thereby removing any included solution and pulling a vacuum on the canal, thus reducing the pressure within the canal. Note: this is not just using a standard dental vacuum probe. The vacuum probe will have a seal that completely seals the tooth and not just the standard suction action. This will allow the pressure within the canal system to be reduced significantly. Introducing either the first or second solution into the vacuum-vacated canal uses atmospheric pressure to force the solutions into small and typically inaccessible areas. In addition, since the tooth is sealed to this probe, pressure could be used to increase the penetration of the therapeutic solution throughout the canal system.

This vacuum/pressure methodology can also be applicable to more effectively infusing the filling materials. Standard pressure and vacuum use in dentistry usually means using a pressurized syringe or a vacuum tool for a tooth open to the atmosphere. In the proposed application there is a seal closing the tooth to atmosphere allowing direct application of vacuum/pressure to the root canal system. This creates an actual vacuum or pressure to the root canal system that is not possible when the tooth is open to atmosphere.

Nanotubes or other micro-structures can then be moved around in the therapeutic fluid by applying a magnetic field. An alternating or pulsed magnetic field could impart significant motion and stirring of the therapeutic. Since the field would penetrate the entire tooth, the stirring action would also occur throughout the lateral or accessory canal system. These moving micro-particles would also act as an abrasive on any bacteria, virus, nerve material, or debris within the canal system. The effect would be a more thorough circulation of the therapeutic throughout the canal system to provide superior cleaning and debridment of the canal system. Magnetic material can also be inserted into, adsorbed onto, or absorbed into the nanotube or other microstructure increasing its magnetic moment.

TiO2 or other similar compounds can be activated and made bactericidal by exposing them to UV light or by inserting them in an electric field. Once excited these can destroy bacteria and other organic compounds such as remaining nerve tissue. Such compounds can be part of a therapeutic and can be activated by a UV light source pointed toward the therapeutic fluid, a UV source dipped into the fluid or a UV laser source.

These TiO2 or other similar compounds can also be activated by an alternating or pulsed electric field. One means to supply such an electric field could be by an external device that would bridge the tooth. Since the field propagates throughout the entire tooth it would also react TiO or other similar compounds within the accessory or lateral canals. This action could also be combined with the micro-particle based motion action mentioned above.
This combination would more thoroughly clean and debride the canals.

Since electric fields are generated externally and penetrate the entire root structure they could be used several months or on a yearly basis after the tooth is sealed to reactivate the titanium oxide and its bacterialcidal properties.

The present invention also includes embodiments of the individual components, kits, methods, their manufacture, and their assembly into one singular procedure. Still further herein included are methods and processes for use of the individual components and the integration in biological applications.

As used herein, "nanotechnology" includes, but is not limited to the field of applied science focused on the design, synthesis, characterization and application .of materials and devices on the nanoscale, such as fullerenes, bucky-tubes, bucky-balls, nano-particles, ceramic particles, agglomerates of the same, and derivatives of the same. Nanotechnology is a sub classification of technology in colloidal science, biology, physics, chemistry and other scientific fields, defined as "the understanding and control of matter at dimensions of roughly 1 to 1000 nanometers, where unique phenomena enable novel applications."

As used herein, "microtechnology" includes, but is not limited to the field of applied science focused on the design, synthesis, characterization and application of materials and devices on the microscale, such as long fullerenes, long bucky-tubes, micro-particles, ceramic particles, agglomerates of the same, and derivatives of the same. Microtechnology is a sub classification of technology in colloidal science, biology, physics, chemistry and other scientific fields, defined as "the understanding and control of matter at dimensions of roughly 1to 1000 micrometers, where unique phenomena enable novel applications."

As used herein, "porositize" includes, but is not limited to the generation of pores, holes, canals, or some form of opening, usually very small and the like in the targeted structure, e.g., nerve, tissue, bone, solids, gels, etc.

As used herein "chemoacoustic waves" are waves created when a chemistry rapidly expands or changes phases, etc. This expansion or change can be initiated by an external excitation force similar to those previously mentioned. The chemistries can be contained within or absorbed within on onto nanotubes or other hollow structures. The rapid expansion of contained chemistry produces a chemoacoustic shock wave which propagates throughout the fluid. This wave can activate other localized caries producing a chain reaction. This action provides a very through stirring effect propagating the therapeutic throughout the targeted area, i.e. root canal system.

As used herein the use of "catalytic agents" such as titanium oxide provides energy and/or the ability to break carbon-carbon bonds and thereby dissolve tissue and/or provide a modality to kill bacteria and viruses. When titanium dioxide (TiO2) is exposed to ultraviolet (UV) light it will excite electrons from the valence band to the conduction, resulting in oxidative and reductive mechanisms in the presence of oxygen and water. This photocatalytic activity ultimately results in the generation of reactive oxygen species, such as hydrogen peroxide, hydroxyl radical and superoxide anion that exhibit superior organic matter decomposition and strong bactericidal activity due to this photocatalytic property of the semiconductor. This action can be enhanced or improved by combining the catalytic agent with additional agents such as silver to provide improved antibacterial effect with or without light. The photocatalytic and the biocidal activity can also be significantly enhanced by reducing the size of the TiO particle and/or incorporation into alternate chemical architectures such as titanium oxide nanotubes. These modifications result in increasing the surface area with improvements in photoefficience and the photocatalytic property by making the surface of the particle more active to light and water adsorption. Thus, illuminated TiO2 can decompose and mineralize organic compounds and bio-microorganisms by participating in a series of oxidation reactions leading to carbon dioxide and water.

This action can also be created by other exciting functions such as alternating electric fields. Therefore, this action could be initiated during the procedure with UV light and/or alternating electric fields or at some time in the future after the procedure is completed by alternating electric fields external to the tooth.

As used herein the use of "micro-particles" such as iron and/or other magnetic and paramagnetic material can be introduced providing stirring motion or abrasive action within the fluid. This motion is activated by an alternating or pulsed magnetic field, which is applied externally to the tooth providing a field throughout the tooth providing action within or to the accessory or lateral canals or throughout the entire tooth.

All publications and patent applications are herein incorporated by reference to the same extent as if each individual publication or patent application was specifically and individually indicated to be incorporated by reference. Although the present invention has been described in some detail by way of illustration and example for purposes of clarity and understanding, it will be apparent that certain changes and modifications may be practiced within the scope of the appended claims.

The preferred embodiment of the invention is described above in the Drawings and Description of Preferred Embodiments. While these descriptions directly describe the above embodiments, it is understood that those skilled in the art may conceive modifications and/or variations to the specific embodiments shown and described herein. Any such modifications or variations that fall within the purview of this description are intended to be included therein as well. Unless specifically noted, it is the intention of the inventor that the words and phrases in the specification and claims he given the ordinary and accustomed meanings to those of ordinary skill in the applicable art(s). The foregoing description of a preferred embodiment and best mode of the invention known to the applicant at the time of filing the application has been presented and is intended for the purposes of illustration and description.
It is not intended to be exhaustive or to limit the invention to the precise form disclosed, and many modifications and variations are possible in the light of the above teachings. The embodiment was chosen and described in order to best explain the principles of the invention and its practical application and to enable others skilled in the art to best utilize the invention in various embodiments and with various modifications as are suited to the particular use contemplated.

Some examples of the disclosure is listed below.
1. A method for treating a root canal comprising the steps of:
   a. dispensing a first solution slowly into the main root nerve and canal and allowing it to penetrate into accessory nerve canals, said first solution comprising a fullerene structured carrier and an oxidizing agent;
   b. applying an activating energy, which activates the first solution thereby porositizing the nerve tissue thereby allowing more agent access to repeat the process;
   c. optionally removing the porositized nerve from the root canal; and
   d. dispensing a second solution to complete remaining tissue dissolution, said second solution comprising a chemical that dissolves nerve tissue.
2. The method according to example 1 wherein the canal is not filed prior to the method 1 treatment.
3. The method according to example 1 wherein the activating energy is selected from the group consisting of photons (light), sonics, ultrasonics, photo-acoustics, thermoacoustics, micromechanical stirring, rotary mechanical stirring magnetic fields, electric fields, radio-frequencys, and chemoacoustics and combinations thereof.
4. The method according to example 3 wherein the activating energy is ultrasonics and/or photons (light).
5. The method according to example 1 used to treat dental caries, periodontal diseases, and to expand and destroy diseased tissues.
6. The method according to example 1 used to aid infusion of beneficial therapeutics.
7. The method according to example 1 wherein the fullerene structured carrier are carbon nanotubes.
8. The method according to example 1 wherein the step of dispensing the second solution is performed prior to the step of applying the activating, energy.
9. The method according to example 8 wherein the steps of dispensing the first solution and dispensing the second solution are performed simultaneously either by combining the two solution prior dispensation or by dispensing them separately and simultaneously.
10. A method for stirring, distributing, abrading, or debriding a root canal or area of interest in a tooth comprising the steps of;
   a. dispensing a first solution slowly into the main root nerve and canal or area of interest and allowing it to penetrate into accessory nerve canals or area of interest, said first solution comprising a fullerene structured carrier and an oxidizing agent;
   b. applying a pulsating or alternating activating energy to the first composition thereby causing the fullerene carrier to vascilate, thereby stirring, distributing, abrading, or debriding the root canal or area of interest;
   c. adding a second solution to complete remaining tissue dissolution, said second solution comprising a chemical that dissolves nerve tissue.
11. The method according to example 10 wherein the alternating or pulsating energy is applied by a device that bridges the tooth.
12. The method according to example 10 wherein the fullerene carrier is ferromagnetic.
13. The method according to example 10 wherein the fullerene carrier is paramagnetic.
14. The method according to example 10 wherein the fullerene carrier is diamagnetic.
15. The method according to example 10 used to treat dental caries, periodontal diseases, and to expand and destroy diseased tissues.
16. The method according to example 10 used to aid infusion of beneficial therapeutics.
17. The method according to example 10 wherein the fullerene structured carrier are carbon nanotubes.

## Claims

1. A system for a treatment of a root canal of a tooth, the system comprising:
a laser source configured to generate a pulsed laser light, an optical light fiber connectable to said laser source, wherein said optical light fiber having an application tip, said tip configured to direct said laser light into a fluid dispersed in said root canal and thereby create a photoacoustic wave propagating in said fluid throughout said root canal for said treatment.

2. The system according to claim 1, wherein said photoacoustic wave is configured to propagate throughout a main canal and a plurality of lateral canals of said root canal.

3. The system according to any of claims 1 and 2, wherein the tip is tapered:

4. The system according to any of claims 1 and 2, wherein the tip is tapered at an angle from about 30 degrees to about 36 degrees.

5. The system according to any of claims 1 and 2, wherein the tip is flat.

6. The system according to any of claims 1 and 2, wherein the tip is beveled.

7. The system according to any of claims 1 and 2, wherein the tip has a conical shape.

8. The system according to any of the preceding claims, wherein the optical fiber comprises a cladding.

9. The system according to claim 8, wherein the cladding is stripped at a distal end of the optical fiber, the stripped optical fiber being configured to laterally disperse the laser light in the root canal.

10. The system according to claim 9, wherein the cladding is stripped rearwardly from about 5 mm to 15 mm of the distal end of the optical light fiber.
